# EUROPEAN PATENT SPECIFICATION

(11) **EP 3 637 817 B1**
(45) Date of publication and mention of the grant of the patent: **26.07.2023**
(21) Application number: 17915490.1
(22) Date of filing: 30.06.2017
(51) Int. Cl.: H04W 76/12, H04W 36/00, H04W 84/18, H04W 8/08

(54) **COMMUNICATION METHOD**
KOMMUNIKATIONSVERFAHREN
PROCÉDÉ DE COMMUNICATION

(43) Date of publication of application: 15.04.2020
(73) Proprietor: Huawei Technologies Co., Ltd., Longgang District Shenzhen, Guangdong 518129 (CN)
(72) Inventor: LUO, Jing, Shenzhen Guangdong 518129 (CN)
(74) Representative: Gill Jennings & Every LLP
(86) International application number: PCT/CN2017/091124
(87) International publication number: WO 2019/000403

(56) References cited:
- CN-A- 101 207 893
- CN-A- 101 635 692
- CN-A- 101 707 776
- CN-A- 101 873 582
- US-A1- 2012 182 887
- US-A1- 2013 267 166
- MARTIN JOHNSSON ERICSSON: "Simple Mobile IP (SMIP); draft-ietf-mobileip-simple-01.txt", SIMPLE MOBILE IP (SMIP); DRAFT-IETF-MOBILEIP-SIMPLE-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. mobileip, no. 1, 1 March 1999 (1999-03-01), XP015023502,
- "Open Mobile LAN Infrastructure ; avb-cho-Mbridge-ETRI-0107", IEEE DRAFT; AVB-CHO-MBRIDGE-ETRI-0107, IEEE-SA, PISCATAWAY, NJ USA, vol. 802.1, 10 January 2007 (2007-01-10), pages 1-9, XP017641095, [retrieved on 2007-01-10]
- HUAWEI TECHNOLOGIES CO LTD: "Mobile LAN: a cellular network-based dynamic local area network", ETSI DRAFT; NGP(17)000028, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG NGP Next Generation Protocols 13 February 2017 (2017-02-13), pages 1-10, XP014308632, Retrieved from the Internet: URL:docbox.etsi.org/ISG/NGP/05-Contributio ns/2017/NGP(17)000028_Mobile_LAN_a_cellula r_network_based_dynamic_LAN.pptx [retrieved on 2017-02-13]

## Description

### TECHNICAL FIELD

This application relates to the communications field, and in particular, to a communication method.

### BACKGROUND

A local access network (local access network, LAN) service is currently a widely used local area network service, and is mainly applied to scenarios such as enterprise offices. Currently, a LAN is deployed in a fixed wired mode. However, in a scenario in which mobile terminals perform communication through a wireless network, the mobile terminals cannot establish a LAN.

It can be learned that how to perform LAN communication based on a wireless network becomes an urgent problem to be resolved currently.

"Simple Mobile IP (SMIP); draft-ietf-mobileip-simple-01.txt" by Martin Johnson describes alternative support for IP mobility.

"Open Mobile LAN Infrastructure ; avb-cho-Mbridge-ETRI-01 07" describes open MLAN infrastructure.

"Mobile LAN: a cellular network-based dynamic local area network" describes MLAN architecture.

US2013/0267166 describes system for providing a mobile data service to a mobile device over a fixed wireless data network comprising an enterprise network having a WLAN.

### SUMMARY

This application provides a communication method, to resolve a problem of how to perform LAN communication based on a wireless network. The invention is defined by the appended independent claim and further embodiments are described by the dependent claims.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may further derive other drawings from these accompanying drawings without creative efforts.
FIG. 1 is a basic architectural diagram of a wireless network;
FIG. 2 is a schematic diagram of performing LAN communication with a terminal by a communications device according to an embodiment of the present invention;
FIG. 3A and FIG. 3B are a flowchart of a method for a terminal and a communications device to establish an MLAN and perform MLAN-based communication according to an embodiment of the present invention;
FIG. 4 is a schematic diagram of handing over a terminal from one base station to another base station in an MLAN scenario;
FIG. 5 is a schematic diagram of a handover process of a communications device according to an embodiment of the present invention;
FIG. 6 is a flowchart of another method for a terminal and a communication device to establish an MLAN and perform MLAN-based communication according to an embodiment of the present invention;
FIG. 7 is a schematic structural diagram of a communications device according to an embodiment of the present invention; and
FIG. 8 is a schematic structural diagram of a terminal according to an embodiment not covered by the current invention.

### DESCRIPTION OF EMBODIMENTS

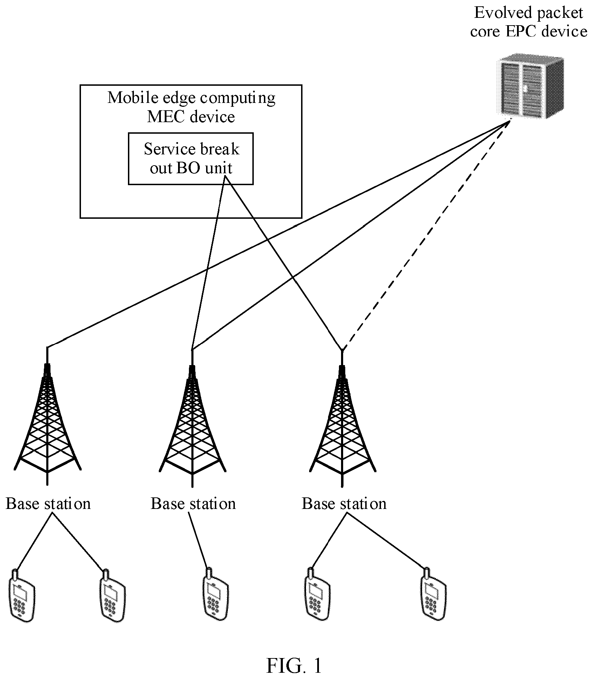

FIG. 1 shows a basic architecture of a wireless network. A network side includes a mobile edge computing (mobile edge computing, MEC) module, an evolved packet core (evolved packet core, EPC) module, and a base station. The MEC module is configured to implement local service break out and forwarding, and is specifically implemented by a service break out (break out, BO) submodule. The EPC module is configured to implement wireless network access management. Mobile terminals communicate with the network side through the base station.

To implement LAN communication between the mobile terminals in FIG. 1, an embodiment of this application discloses a communications device. For ease of description, a wireless network-based LAN is referred to as a mobile local access network (mobile local access network, MLAN) below.

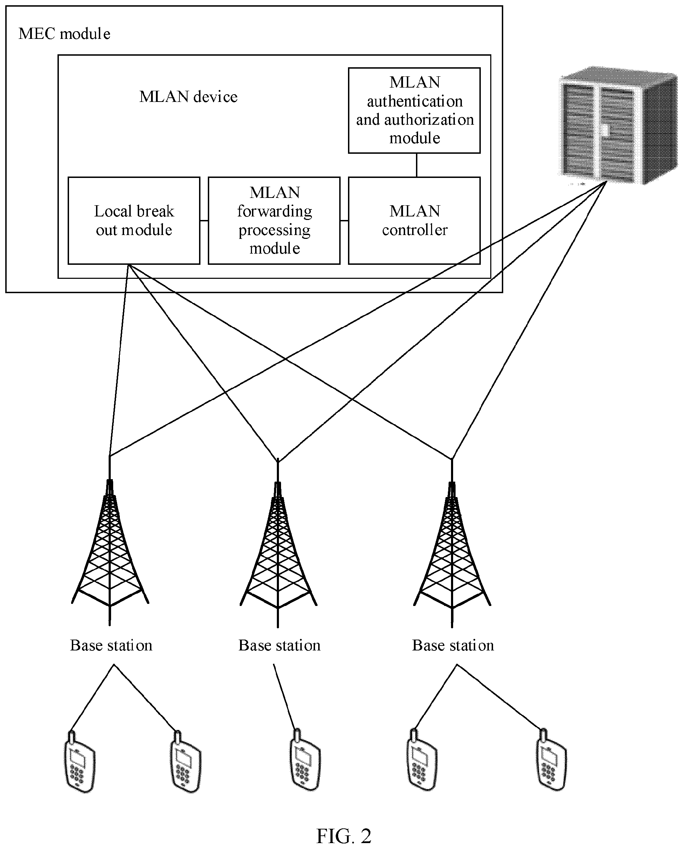

As shown in FIG. 2, the communications device disclosed in this application includes a local break out (local break out, LBO) module, an MLAN controller (controller), an MLAN authentication and authorization module, and an MLAN forwarding processing module. An MLAN device is disposed in the MEC module, and interacts with the existing modules in FIG. 1 to implement the LAN communication between the mobile terminals.

An advantage of disposing the communications device in the MEC module is that the MEC module is close to a base station in an existing network architecture, or may be disposed in the base station, and therefore, disposition of the communications device in the MEC module can reduce an MLAN-based data forwarding delay, and the MLAN device may use the BO submodule of the EPC module as the local break out module, so that costs can be reduced.

The communications device may alternatively be deployed in another device close to the base station, or may be deployed in the base station.

The following describes in detail a function of the communications device.

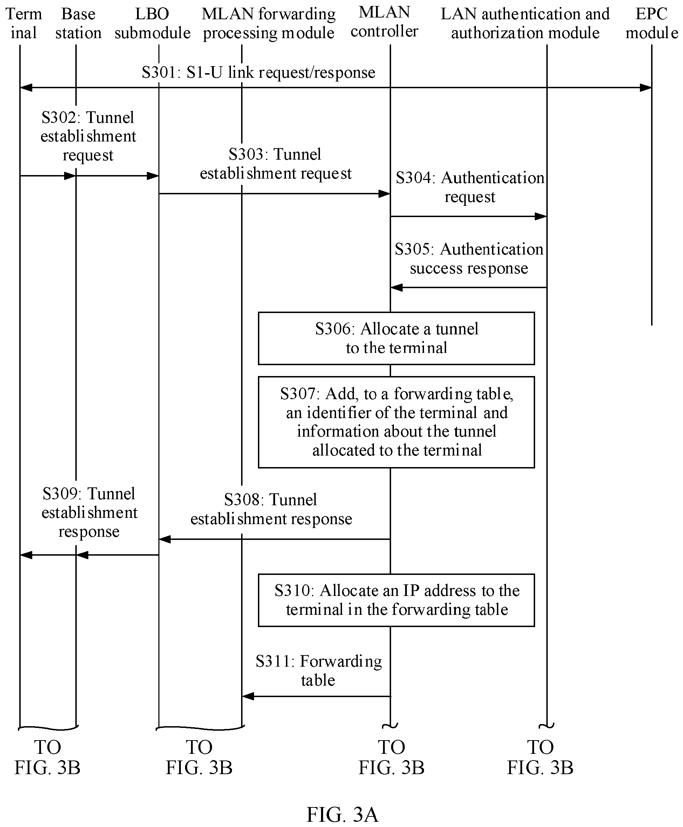

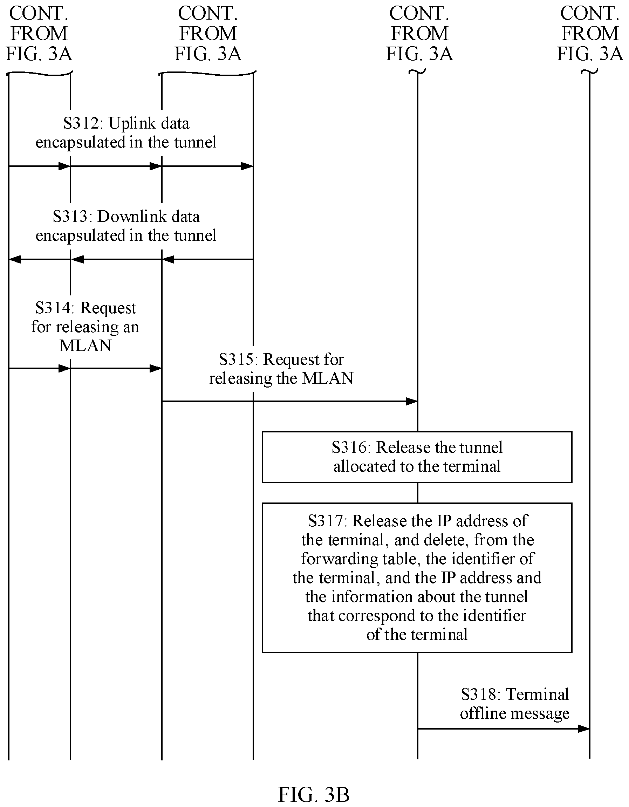

FIG. 3A and FIG. 3B show a method for a terminal and a communications device that are shown in FIG. 2 to establish an MLAN and perform MLAN-based communication. The method includes the following steps.

S301: The terminal establishes an S1-U link to an EPC module.

Specifically, the terminal sends an S 1-U link establishment request to the EPC module through a base station, and the EPC module sends an S1-U link establishment response to the terminal through the base station.

S302: The terminal sends a tunnel establishment request to an LBO module through the base station.

The tunnel establishment request includes an identifier of the terminal. The tunnel establishment request may be generated based on a user datagram protocol (user datagram protocol, UDP).

A tunneling technology is a manner of transferring data between networks by using public network infrastructure. The data transferred through the tunneling technology may be data packets encapsulated by using different protocols. The data packets encapsulated by using other protocols are re-encrypted and encapsulated in new packet headers for sending by using a tunneling protocol. The new packet header provides routing information, so that the newly encapsulated data packet can be routed and transmitted between two endpoints of a tunnel through a public interconnection network. A logical path over which the encapsulated data packet is transferred on a public interconnection network is referred to as a tunnel.

In this embodiment, a protocol used by the tunneling technology may be general route encapsulation (general route encapsulation, GRE) protocol or a GPRS tunneling protocol.

S303: The LBO module forwards the tunnel establishment request to an MLAN controller based on an IP address of the MLAN controller.

Optionally, the IP address of the MLAN controller may be preconfigured on the LBO module, or may be notified by the MLAN controller to the LBO module in advance.

The IP address of the MLAN controller may alternatively be included in the tunnel establishment request, and notified by the terminal to an LBO device. Specifically, the IP address of the MLAN controller may be preconfigured on the terminal. The IP address of the MLAN controller may alternatively be preconfigured on the base station, and sent by the base station to the terminal in broadcast mode. The IP address of the MLAN controller may alternatively be obtained by the terminal by querying a network domain name. In conclusion, after obtaining the IP address of the MLAN controller, the terminal may add the IP address of the MLAN controller to the tunnel establishment request.

S304: After receiving the tunnel establishment request, the MLAN controller obtains the identifier of the terminal from the tunnel establishment request, and sends an authentication request to an MLAN authentication and authorization module, where the authentication request includes the identifier of the terminal.

S305: After verifying that the terminal is valid, the MLAN authentication and authorization module sends an authentication success response to the MLAN controller. S306: The MLAN controller allocates a tunnel to the terminal.

S307: The MLAN controller adds, to a forwarding table, the identifier of the terminal and information about the tunnel allocated to the terminal.

S308: The MLAN controller sends a tunnel establishment response to the LBO module, where the tunnel establishment response includes the information about the tunnel allocated to the terminal.

The tunnel establishment response may be generated based on the UDP protocol. S309: The LBO module sends the tunnel establishment response to the terminal through the base station, where the tunnel establishment response includes the information about the tunnel allocated to the terminal.

If the MLAN authentication and authorization module verifies that the terminal is invalid, the MLAN controller rejects establishment of the tunnel. Specifically, the tunnel establishment response includes a rejection message.

In this way, establishment of the tunnel between the terminal and an MLAN device is completed.

S310: The MLAN controller allocates the IP address to the terminal in the forwarding table, and correspondingly records the IP address and the identifier of the terminal in the forwarding table. In this way, the forwarding table records the identifier of the terminal, the information about the tunnel corresponding to the identifier of the terminal, and the IP address of the terminal.

In other words, in this embodiment, in addition to the IP address that is allocated by a core network device to the terminal and that is used for wireless cellular network communication, the terminal has an IP address used for MLAN communication. The IP address is only an implementation of an MLAN address.

Specifically, the MLAN controller may negotiate with the terminal to allocate the IP address by using a dynamic host configuration protocol (dynamic host configuration protocol, DHCP).

S311: The MLAN controller sends the forwarding table to an MLAN forwarding processing module.

In this way, configuration between the terminal and the MLAN is completed, and terminals may communicate with each other through the base station and the MLAN, for example, S312 to S313.

S312: The terminal encapsulates data in the tunnel based on the information about the tunnel allocated by the MLAN controller, and sends the data to the MLAN device. The data includes the identifier of the terminal as a receive end of the data and to-be-sent information.

Because the tunnel includes the base station and the LBO module, a specific process in which the terminal encapsulates the data in the tunnel and sends the data to the MLAN device is as follows: The terminal sends the data to the base station, and the base station sends the data to the LBO module. In this way, transmission on the tunnel is completed, and the LBO module sends the data to the MLAN forwarding processing module. S313: The MLAN forwarding processing module queries, based on the identifier of the terminal as the receive end, the forwarding table to obtain the IP address of the terminal as the receive end and the information about the tunnel; and encapsulates the to-be-sent information in the tunnel based on the IP address and the information about the tunnel, and forwards the to-be-sent information to the terminal as the receive end.

A specific sending manner of the MLAN forwarding processing module may be unicast or multicast.

After completing an MLAN service, the terminal may delete the tunnel between the MLAN device and the base station and the terminal covered by the base station. Specifically, the following steps are included:
S314: The terminal sends a request for releasing the MLAN to the LBO module through the base station.
S315: The LBO module sends the request for releasing the MLAN to the MLAN controller.
S316: The MLAN controller releases the tunnel allocated to the terminal.
S317: The MLAN controller releases the IP address of the terminal, and deletes, from the forwarding table, the identifier of the terminal, and the IP address and the information about the tunnel that correspond to the identifier of the terminal.
S318: The MLAN controller sends a terminal offline message to the MLAN authentication and authorization module.

It can be learned from the method shown in FIG. 3A and FIG. 3B that according to the MLAN-based communication method described in this embodiment, a LAN can be rapidly established based on a wireless network without cabling. Therefore, costs of deploying the LAN can be reduced. In addition, according to the method shown in FIG. 3A and FIG. 3B, an objective of establishing a plurality of MLAN networks can be achieved. Further, the tunneling technology may be used to implement security isolation between different MLANs.

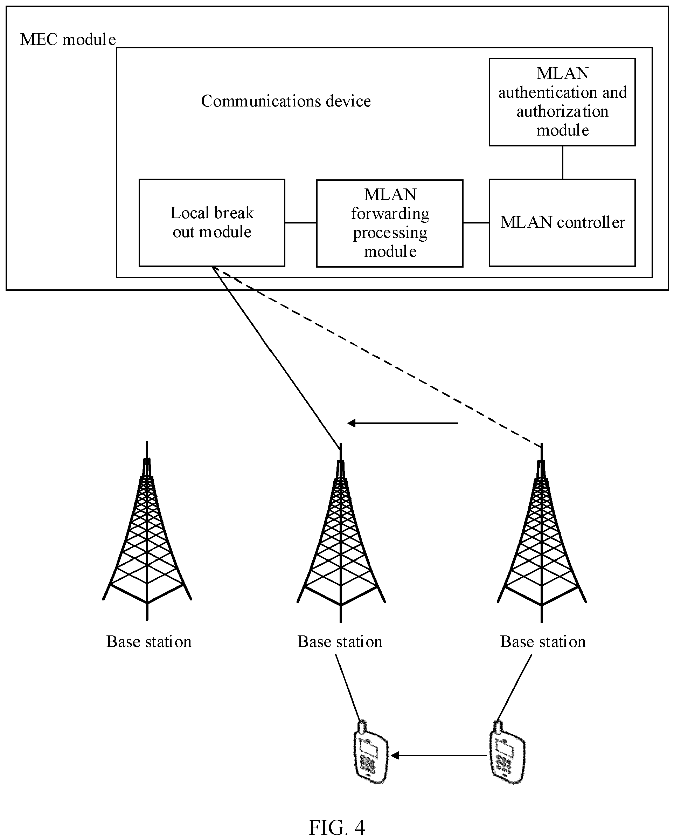

In a wireless network, handover is a common scenario. The handover refers to a process in which a wireless connection is handed over from a source base station to a target base station after a terminal moves from coverage of one base station to coverage of another base station. FIG. 4 is a schematic diagram of handing over a terminal from one base station to another base station in an MLAN scenario.

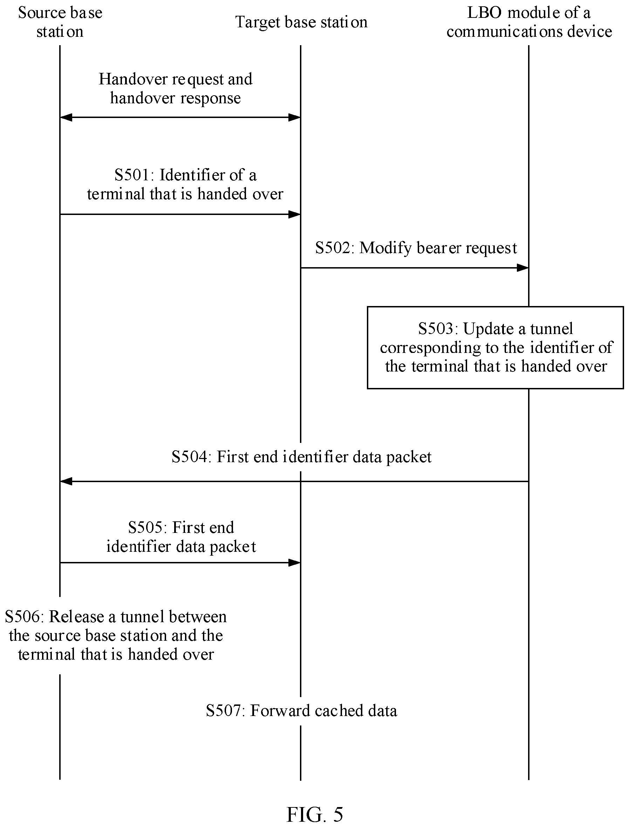

FIG. 5 shows a handover process of the communications device shown in FIG. 1, and the handover process includes the following steps.

S501: After a handover request and a handover response between a source base station and a destination base station are completed, the source base station sends, to the destination base station through an X2 interface, an identifier of a terminal that is handed over.

S502: The destination base station sends a modify bearer request to an LBO module, where the modify bearer request includes a correspondence between the identifier of the terminal that is handed over and the destination base station.

S503: The LBO module updates a tunnel corresponding to the identifier of the terminal that is handed over.

As described above, a logical path over which an encapsulated data packet is transferred on a public network is referred to as a tunnel. Therefore, if a base station covering a terminal changes from the source base station to the destination base station, the tunnel changes. The correspondence between the identifier of the terminal that is handed over and the destination base station is sent to the LBO module, and a record of the LBO module is updated to information about the tunnel corresponding to the terminal that is handed over, so that downlink data after the handover can be correctly forwarded in a subsequent data forwarding process, and an MLAN forwarding processing module is insensitive to the handover.

S504: The LBO module sends an end identifier data packet to the source base station. The end identifier data packet is referred to as a first end identifier data packet in this embodiment.

S505: The source base station sends the first end identifier data packet to the destination base station.

S506: After the source base station receives the first end identifier data packet and a second end identifier data packet that is sent by an EPC module, or after the source base station waits for preset duration starting from release of a resource of the terminal that is handed over, the source base station releases a tunnel between the source base station and the terminal that is handed over.

S507: After the destination base station receives the first end identifier data packet and the second end identifier data packet that is sent by the EPC module, or after the destination base station waits for preset duration starting from release, from the source base station, of the resource of the terminal that is handed over, the destination base station forwards the cached data.

It should be noted that this embodiment describes only a distinguishing feature between a terminal handover in an MLAN scenario and the prior art. The handover process shown in FIG. 5 may be performed after S311 and before S314 shown in FIG. 3A and FIG. 3B, and for processes of configuration between the terminal and the MLAN and tunnel establishment and release, refer to FIG. 3A and FIG. 3B. Details are not described herein again.

It should be noted that the tunneling technology shown in FIG. 3A and FIG. 3B facilitates security isolation between different LAN services. However, communication between the communications device and the terminal described in this embodiment of this application is not limited to use of the tunneling technology. In addition, the communications device may not verify validity of the terminal.

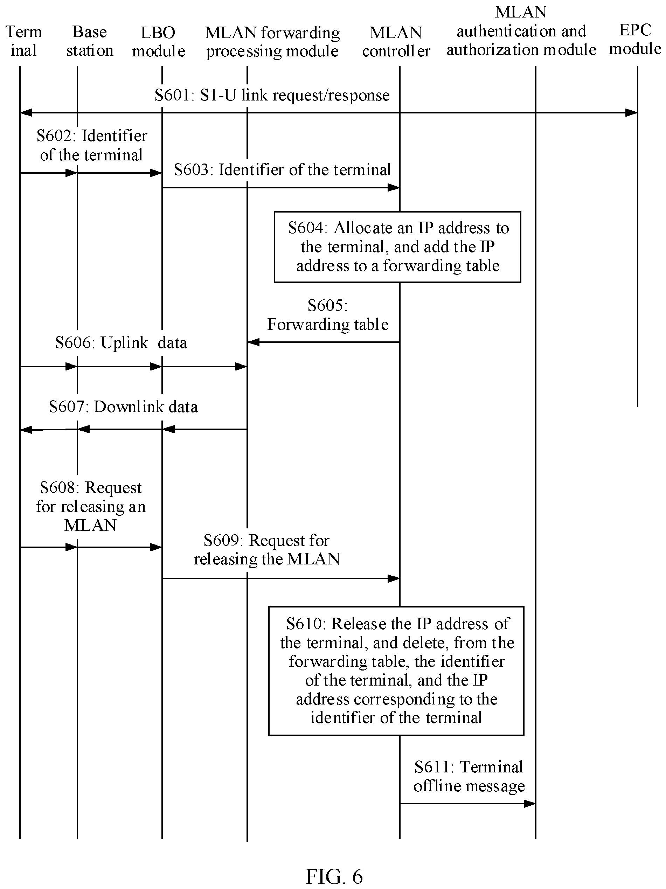

Therefore, as shown in FIG. 6, an embodiment provides another method for a terminal and a communications device to establish an MLAN and perform MLAN-based communication. The method includes the following steps.

S601: A terminal establishes an S1-U link to an EPC module.

S602: The terminal sends an identifier of the terminal to an LBO module through a base station.

S603: The LBO module sends the identifier of the terminal to an MLAN controller.

S604: The MLAN controller allocates an IP address to the terminal, and correspondingly stores the identifier and the IP address of the terminal in a forwarding table.

S605: The MLAN controller sends the forwarding table to an MLAN forwarding processing module.

S606: The terminal sends uplink data to the LBO module through the base station, and then the LBO module forwards received data to the MLAN forwarding processing module. The data includes the identifier of the terminal as a data receive end and to-be-sent information.

A process in which the terminal sends the uplink data to the LBO module through the base station is as follows: The terminal sends the data to the base station, and the base station forwards the data to the LBO module.

In this application, the data sent by the communications device to the terminal is first sent to the base station, and then is forwarded by the base station to the terminal.

S607: The MLAN forwarding processing module queries, based on the identifier of the terminal as the receive end, the forwarding table to obtain the IP address of the terminal as the receive end, and forwards, based on the IP address, the to-be-sent information to the terminal as the receive end through the LBO module and the base station.

S608 to S611 show a process of releasing the terminal, which is similar to the process of releasing the terminal in FIG. 3A and FIG. 3B. For details, refer to FIG. 6. Details are not described herein again.

Based on FIG. 6, if the terminal is handed over, a response procedure of an MLAN device is similar to that in FIG. 5. A difference lies in the following: After receiving a modify bearer request, the LBO module stores a correspondence between the terminal and a target base station, and forwards, in a process of sending downlink data, the downlink data sent to the terminal to the target base station instead of a source base station.

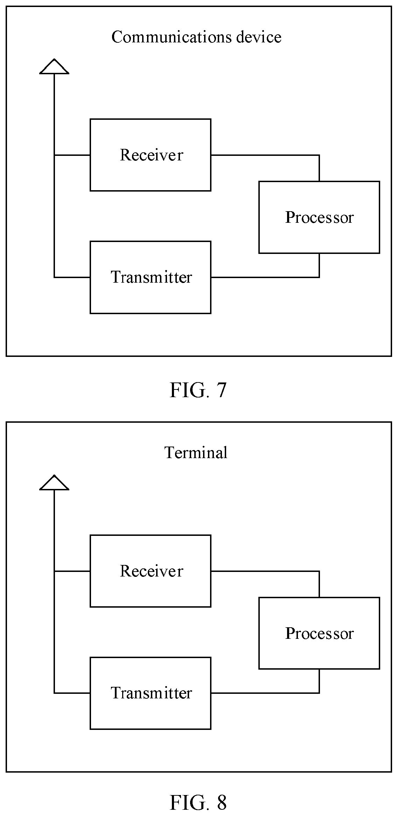

FIG. 7 shows a structure of a communications device according to an embodiment of this application. The communications device includes: a receiver, a transmitter, and a processor.

The receiver is configured to receive data that is sent by a terminal through a base station, where the data includes an identifier of a receive end and to-be-sent information, the receive end and the terminal are located in a mobile local access network MLAN, and the MLAN is a local access network established based on a wireless cellular network. The transmitter is configured to send, based on an MLAN address corresponding to the identifier of the receive end, the to-be-sent information to the receive end through the base station. The processor is configured to allocate, to the terminal, an MLAN address corresponding to an identifier of the terminal, and may be further configured to allocate, to the terminal, a tunnel corresponding to the identifier of the terminal.

For a specific process in which the processor, the transmitter, and the receiver implement the foregoing functions and implementation of more additional functions, refer to the method embodiments. Details are not described herein again. The processor, the transmitter, and the receiver may communicate with each other through a bus.

As shown in FIG. 2, the communications device may be disposed in an MEC module, or may be disposed in the base station, or may be disposed in a network as an independent network element.

The communications device shown in FIG. 7 can establish the MLAN based on the wireless cellular network without cabling. Therefore, costs of deploying a LAN can be reduced.

FIG. 8 shows a terminal according to an embodiment not covered by the current invention. The terminal includes a transmitter, and usually may further include a processor and a receiver.

The transmitter is configured to: send an identifier of the terminal through a base station, where the identifier of the terminal is used to obtain an MLAN address, the MLAN address is used to communicate with a device in a mobile local access network MLAN, and the MLAN is a local access network established based on a wireless cellular network; and send data through the base station, where the data includes an identifier of a receive end and to-be-sent information, and the receive end and the terminal are located in the MLAN. In addition, the transmitter is further configured to send, through the base station, a request for releasing the MLAN, where the request for releasing the MLAN is used by the MLAN to release an MLAN address and/or a tunnel that correspond/corresponds to the identifier of the terminal.

For specific functions of the processor, the receiver, and a memory, refer to the prior art. The transmitter, the processor, the receiver, and the memory may communicate with each other through a bus.

The terminal shown in FIG. 8 may actively obtain an MLAN address from a network, to communicate with another device through the MLAN.

An embodiment, not covered by the current invention, further discloses a system on chip. The system on chip includes: at least one processor, a memory, an interface circuit, and a bus. The at least one processor, the memory, and the interface circuit are coupled through the bus. The system on chip may be applied to the communications device shown in FIG. 7, and interact with the communications device via the interface circuit. The memory stores a program instruction. The at least one processor invokes the program instruction stored in the memory, to perform operations of the communications device shown in FIG. 3A and FIG. 3B, FIG. 5, or FIG. 6.

Alternatively, the system on chip may be applied to the terminal shown in FIG. 8, and interact with the terminal via the interface circuit. The memory stores a program instruction. The at least one processor invokes the program instruction stored in the memory, to perform operations of the terminal shown in FIG. 3A and FIG. 3B, FIG. 5, or FIG. 6.

An embodiment, not covered by the current invention, further discloses a computer storage medium. The computer-readable storage medium stores a program instruction, and when the program instruction is run on a computer, operations of the communications device or the terminal shown in FIG. 3A and FIG. 3B, FIG. 5, or FIG. 6 are performed.

An embodiment, not covered by the current invention, further discloses a computer program product. The computer program product includes a program instruction, and when the program instruction is invoked, operations of the communications device or the terminal shown in FIG. 3A and FIG. 3B, FIG. 5, or FIG. 6 are performed.

Terms "uplink" and "downlink" in this application are used to describe data/information transmission directions in some scenarios. For example, an "uplink" direction is a direction in which data/information is transmitted from a terminal device to a core network device, and a "downlink" direction is a direction in which the data/information is transmitted from the core network device to the terminal device. "Uplink" and "downlink" are used to describe only directions, and are not intended to limit a specific device from which data/information transmission starts or a specific device at which data/information transmission stops. Aterm "and/or" in this patent application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects. In this application, names may be assigned to various types of objects such as messages/information/devices/network elements/systems/apparatuses/actions/operations/procedures/concepts. However, these specific names do not constitute a limitation on the related objects. The assigned names may vary with a factor such as a scenario, a context, or a usage habit. An understanding of a technical meaning of a related object should be mainly determined from a function and a technical effect that are embodied/performed in a technical solution.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or parts may be combined or integrated into another system, or some features may be ignored or not performed. In addition, the displayed or discussed mutual couplings or direct couplings or communication connection may be implemented through some interfaces. The indirect couplings or communication connection between the apparatuses or units may be implemented in electronic, mechanical, or other forms.

The units described as separate parts may or may not be physically separate; and parts displayed as units may or may not be physical units, in other words, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. In conclusion, the foregoing embodiments are merely intended for describing the technical solutions of this application, but not for limiting this application.

## Claims

1. A communication method, performed by a communications device including a local break out module, a mobile local access network MLAN controller, a MLAN authentication and authorization module, and a MLAN forwarding processing module, the method comprising:
receiving, by the local break out module, data that is sent by a terminal through a base station, wherein the data comprises an identifier of a receive end and to-be-sent information, the receive end and the terminal are located in a MLAN, and the MLAN is a local access network established based on a wireless cellular network; and
sending by the MLAN forwarding processing module, based on an MLAN address corresponding to the identifier of the receive end, the to-be-sent information to the receive end through the base station
**characterized in that** a process of establishing the MLAN comprises:
receiving, by the MLAN controller, an identifier that is of the terminal and that is sent by the terminal through the base station;
sending (304), by the MLAN controller, an authentication request to the MLAN authentication and authorization module, where the authentication request includes the identifier of the terminal;
if it is determined, based on the identifier of the terminal, that the terminal is valid:
receiving (S305), by the MLAN controller, an authentication success response from the MLAN authentication and authorization module;
allocating, by the MLAN controller, to the terminal, an MLAN address corresponding to the identifier of the terminal.
allocating (306),, by the MLAN controller, to the terminal, a tunnel corresponding to the identifier of the terminal; and
sending (308), by the MLAN controller, information about the tunnel to the terminal through the base station.

2. The method according to claim 1, wherein the receiving data that is sent by a terminal through a base station comprises:
receiving (S312), by the local break out module, the data that is encapsulated in the tunnel and that is sent by the terminal through the base station.

3. The method according to any one of claims 1 to 2, further comprising:
receiving information about a destination base station to which the terminal is handed over, wherein the information about the destination base station is sent by the destination base station if the terminal is handed over from a source base station to the destination base station; and
updating, by the local break out module, from the source base station to the destination base station, the base station used to send the to-be-sent information to the receive end.

4. The method according to any one of claims 1 to 3, further comprising:
receiving (S315), by the MLAN controller, a request for releasing the MLAN that is sent by the terminal through the base station; and
releasing (S316), by the MLAN controller, the MLAN address and/or the tunnel that correspond/corresponds to the identifier of the terminal.

## Patentansprüche

1. Kommunikationsverfahren, das von einer Kommunikationsvorrichtung durchgeführt wird, die ein lokales Breakout-Modul, eine MLAN(mobiles lokales Zugangsnetzwerk)-Steuerung, ein MLAN-Authentifizierungs- und - Autorisierungsmodul und ein MLAN-Weiterleitungsverarbeitungsmodul enthält, das Verfahren umfassend:
Empfangen, durch das lokale Breakout-Modul, von Daten, die von einem Endgerät durch eine Basisstation gesendet werden, wobei die Daten eine Kennung eines Empfangsendes und eine zu sendende Information umfassen, wobei sich das Empfangsende und das Endgerät in einem MLAN befinden und das MLAN ein lokales Zugangsnetzwerk ist, das basierend auf einem drahtlosen zellularen Netzwerk eingerichtet ist; und
Senden, durch das MLAN-Weiterleitungsverarbeitungsmodul basierend auf einer MLAN-Adresse, die der Kennung des Empfangsendes entspricht, der zu sendenden Information an das Empfangsende durch die Basisstation;
**dadurch gekennzeichnet, dass** ein Prozess der Einrichtung des MLAN umfasst:
Empfangen, durch die MLAN-Steuerung, einer Kennung, die zu dem Endgerät gehört und die von dem Endgerät durch die Basisstation gesendet wird;
Senden (304), durch die MLAN-Steuerung, einer Authentifizierungsanforderung an das MLAN-Authentifizierungs- und -Autorisierungsmodul, wobei die Authentifizierungsanforderung die Kennung des Endgeräts beinhaltet;
wenn basierend auf der Kennung des Endgeräts bestimmt wird, dass das Endgerät gültig ist:
Empfangen (S305), durch die MLAN-Steuerung, einer Authentifizierungserfolgsantwort von dem MLAN-Authentifizierungs- und - Autorisierungsmodul;
Zuweisen, durch die MLAN-Steuerung an das Endgerät, einer MLAN-Adresse, die der Kennung des Endgeräts entspricht;
Zuweisen (306), durch die MLAN-Steuerung an das Endgerät, eines Tunnels, der der Kennung des Endgeräts entspricht; und
Senden (308), durch die MLAN-Steuerung, einer Information über den Tunnel an das Endgerät durch die Basisstation.

2. Verfahren nach Anspruch 1, wobei das Empfangen von Daten, die von einem Endgerät durch eine Basisstation gesendet werden, umfasst:
Empfangen (S312), durch das lokale Breakout-Modul, der Daten, die in dem Tunnel eingekapselt sind und die von dem Endgerät durch die Basisstation gesendet werden.

3. Verfahren nach einem der Ansprüche 1 bis 2, ferner umfassend:
Empfangen einer Information über eine Zielbasisstation, an die das Endgerät übergeben wird, wobei die Information über die Zielbasisstation von der Zielbasisstation gesendet wird, wenn das Endgerät von einer Quellbasisstation an die Zielbasisstation übergeben wird; und
Aktualisieren, durch das lokale Breakout-Modul von der Quellbasisstation an die Zielbasisstation, der Basisstation, die verwendet wird, um die zu sendende Information an das Empfangsende zu senden.

4. Verfahren nach einem der Ansprüche 1 bis 3, ferner umfassend:
Empfangen (S315), durch die MLAN-Steuerung, einer Anforderung zum Freigeben des MLAN, die von dem Endgerät durch die Basisstation gesendet wird; und
Freigeben (S316), durch die MLAN-Steuerung, der MLAN-Adresse und/oder des Tunnels, die/der der Kennung des Endgeräts entspricht/entsprechen.

## Revendications

1. Procédé de communication, réalisé par un dispositif de communication comprenant un module de dérivation local, un contrôleur de réseau d'accès local mobile MLAN, un module d'authentification et d'autorisation de MLAN et un module de traitement de transfert de MLAN, le procédé comprenant :
la réception, par le module de dérivation local, de données envoyées par un terminal par le biais d'une station de base, dans lequel les données comprennent un identifiant d'une extrémité de réception et des informations à envoyer, l'extrémité de réception et le terminal sont situés dans un MLAN, et le MLAN est un réseau d'accès local établi sur la base d'un réseau cellulaire sans fil ; et
l'envoi par le module de traitement de transfert de MLAN, sur la base d'une adresse de MLAN correspondant à l'identifiant de l'extrémité de réception, des informations à envoyer à l'extrémité de réception par le biais de la station de base **caractérisé en ce qu'**un processus d'établissement du MLAN comprend :
la réception, par le contrôleur de MLAN, d'un identifiant se rapportant au terminal et envoyé par le terminal par le biais de la station de base;
l'envoi (304), par le contrôleur de MLAN, d'une demande d'authentification au module d'authentification et d'autorisation de MLAN, lorsque la demande d'authentification comporte l'identifiant du terminal ;
s'il est déterminé, sur la base de l'identifiant du terminal, que le terminal est valide :
la réception (S305), par le contrôleur de MLAN, d'une réponse d'authentification réussie à partir du module d'authentification et d'autorisation de MLAN ;
l'attribution, par le contrôleur de MLAN, au terminal, d'une adresse de MLAN correspondant à l'identifiant du terminal ;
l'attribution (306), par le contrôleur de MLAN, au terminal, d'un tunnel correspondant à l'identifiant du terminal ; et
l'envoi (308), par le contrôleur de MLAN, d'informations relatives au tunnel au terminal par le biais de la station de base.

2. Procédé selon la revendication 1, dans lequel la réception de données envoyées par un terminal par le biais d'une station de base comprend :
la réception (S312), par le module de dérivation local, des données qui sont encapsulées dans le tunnel et qui sont envoyées par le terminal par le biais de la station de base.

3. Procédé selon l'une quelconque des revendications 1 à 2, comprenant en outre :
la réception d'informations relatives à une station de base de destination sur laquelle le terminal est transféré, dans lequel les informations relatives à la station de base de destination sont envoyées par la station de base de destination si le terminal est transféré depuis une station de base source sur la station de base de destination ; et
la mise à jour, par le module de dérivation local, depuis la station de base source vers la station de base de destination, de la station de base utilisée pour envoyer les informations à envoyer à l'extrémité de réception.

4. Procédé selon l'une quelconque des revendications 1 à 3, comprenant en outre :
la réception (S315), par le contrôleur de MLAN, d'une demande de libération du MLAN envoyée par le terminal par le biais de la station de base ; et
la libération (S316), par le contrôleur de MLAN, de l'adresse de MLAN et/ou du tunnel qui correspondent/correspond à l'identifiant du terminal.
